# FASCICULE DE BREVET EUROPEEN

(11) **EP 1 085 633 B1**
(45) Date de publication et mention de la délivrance du brevet: **17.08.2016**
(21) Numéro de dépôt: 00410099.6
(22) Date de dépôt: 18.08.2000
(51) Int. Cl.: H02H 3/04, H02H 3/093

(54) **Déclencheur comportant une interface homme-machine ameliorée et disjoncteur comportant un tel déclencheur**
Auslöser mit verbesserter Mensch-Maschine Schnittstelle und Schutzschalter mit einem solchen Auslöser
Trip device with an improved man-machine interface and circuit breaker comprising such a trip device

(30) Priorité: 13.09.1999 FR 9911549
(43) Date de publication de la demande: 21.03.2001
(73) Titulaire: Schneider Electric Industries SAS, 92500 Rueil-Malmaison (FR)
(72) Inventeur: Vincent, François, 38050 Grenoble cedex 09 (FR); Weynachter, Luc, 38050 Grenoble cedex 09 (FR); Delvecchio, Alain, 38050 Grenoble cedex 09 (FR)
(74) Mandataire: Tripodi, Paul

(56) Documents cités:
- EP-A- 0 814 393
- DE-A- 19 722 898
- US-A- 5 101 316
- US-A- 5 220 479
- US-A- 5 367 427
- PATENT ABSTRACTS OF JAPAN vol. 1999, no. 12, 29 octobre 1999 (1999-10-29) & JP 11 191927 A (TOSHIBA CORP), 13 juillet 1999 (1999-07-13)

## Description

L'invention concerne un déclencheur électronique comportant :
- une unité de traitement ayant des entrées pour recevoir des signaux électriques représentatifs de grandeurs électriques et une sortie pour fournir un signal de déclenchement à un relais de déclenchement, et
- une interface homme-machine connectée à l'unité de traitement pour fournir des paramètres de réglages et afficher sur un écran des informations et des courbes de déclenchement. L'invention concerne aussi un disjoncteur comportant un tel déclencheur.

Les déclencheurs électroniques de types connus comportent des interfaces homme-machine pour effectuer le réglage des paramètres de déclenchement. Les interfaces homme-machine comportent généralement des écrans pour la visualisation desdits paramètres de réglages et l'affichage de valeurs de grandeur électriques, notamment les valeurs des courants circulant dans les contacts d'un disjoncteur. Il est également connu d'utiliser un clavier ou des touches pour sélectionner des paramètres de réglages pré-établis par exemple des paramètres de seuils ou de temporisations de fonctions de déclenchement.

Un déclencheur comportant une interface homme-machine avec un afficheur à écran plat est décrit notamment dans les brevets FR 2,654,539 et US5,220,479. Dans ces documents l'écran affiche graphiquement la forme de la courbe de déclenchement, des indications de paramètres de réglages, et des valeurs de courants.

D'autres disjoncteurs comportant des interfaces utilisateur avec afficheurs et touches de claviers sont décrits dans les brevets US4,870,531 et US4,991,042. Certains déclencheurs comportent des faces avant avec des courbes dessinées et des LED comme divulguer dans les documents US5,101,316 et US5,367,427.

Cependant, les interfaces homme-machine ou les interfaces utilisateur connues ne permettent pas un réglage sûr des paramètres. Généralement, les interfaces connus utilisent des menus déroulants qui ne repèrent pas suffisamment les manoeuvres de réglage en cours.

L'invention a pour but un déclencheur comportant une interface homme-machine améliorée permettant de régler des paramètres ou de visualiser des informations facilement et de manière sûre, ainsi qu'un disjoncteur comportant un tel déclencheur.

Dans un déclencheur selon l'invention défini dans les revendications, l'interface homme-machine comporte des moyens d'affichage de paramètres de réglage qui modifient l'aspect visuel d'au moins une portion de courbe représentative d'un paramètre en cours de réglage.

Dans un mode de réalisation préférentiel, les moyens d'affichage de paramètres de réglage modifient l'aspect visuel d'au moins une portion de courbe en augmentant l'épaisseur de ladite au moins une portion de courbe représentative d'un paramètre en cours de réglage.

Avantageusement, les moyens d'affichage de paramètres de réglage changent au moins une couleur de texte ou de fond d'au moins une information affichée sur l'écran représentative d'un paramètre en cours de modification de valeur.

Dans un mode de réalisation particulier, l'interface homme-machine comporte des moyens d'affichage d'un menu déroulant pour encadrer lors d'une phase de sélection au moins une information à sélectionner.

De préférence, les moyens d'affichage encadrent dans un menu déroulant une information en butée haute, une information en butée basse, et des informations déroulant dans un cadre en position fixe intermédiaire entre une position haute et une position basse.

De préférence, un déclencheur selon un mode de réalisation de l'invention est paramétré selon un procédé comportant :
- une étape d'action sur une touche de sélection de fonction de réglage,
- une étape d'affichage d'une liste de courbes de protection,
- une étape d'action sur au moins une touche de déplacement dans un menu déroulant,
- une étape d'action sur une touche de validation pour sélectionner une courbe à paramétrer,
- une étape d'affichage d'une courbe sélectionnée et de paramètres de réglages correspondants,
- une étape d'affichage d'une portion de courbe sélectionnée en épaisseur élargie et d'un paramètre correspondant avec un cadre,
- une étape d'action sur au moins une touche de déplacement pour changer de portion de courbe et de paramètre correspondant,
- une étape d'action sur une touche de validation pour passer en mode de modification de valeur de paramètre,
- une étape d'action sur une touche de déplacement pour changer des valeurs de paramètres, et
- une étape d'action sur au moins une touche de validation pour sortir du mode de modification.

Dans un mode réalisation particulier, le déclencheur comporte une interface homme-machine connectée par des moyens de communication à l'unité de traitement.

Avantageusement, les moyens de communication communiquent selon un protocole de type Internet.

De préférence, l'interface homme-machine est représentée sur un écran pour afficher des informations et des courbes de déclenchement et pour déterminer des paramètres de réglage.

De préférence, des paramètres de réglage sont déterminés par des touches représentées sur un écran de l'interface homme-machine.

Un disjoncteur selon l'invention, comportant des contacts principaux connectés en série avec des conducteurs de puissance, des capteurs de courant disposés sur lesdits conducteurs, et un relais de déclenchement recevant un signal de déclenchement pour provoquer l'ouverture desdits contacts, comporte un déclencheur tel que défini ci-dessus connecté audits capteurs de courant et audit relais de déclenchement.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente le schéma d'un disjoncteur comprenant un déclencheur de l'art antérieur,
- la figure 2 représente une interface homme-machine d'un déclencheur selon un mode réalisation de l'invention,
- les figures 3A à 3C représentent des sélections de paramètres à régler,
- les figures 4A et 4B représentent une phase de réglage,
- les figures 5A à 5D représentent le déroulement d'un menu lors d'une phase de sélection d'informations,
- la figure 6 représente un organigramme d'une phase de réglage.

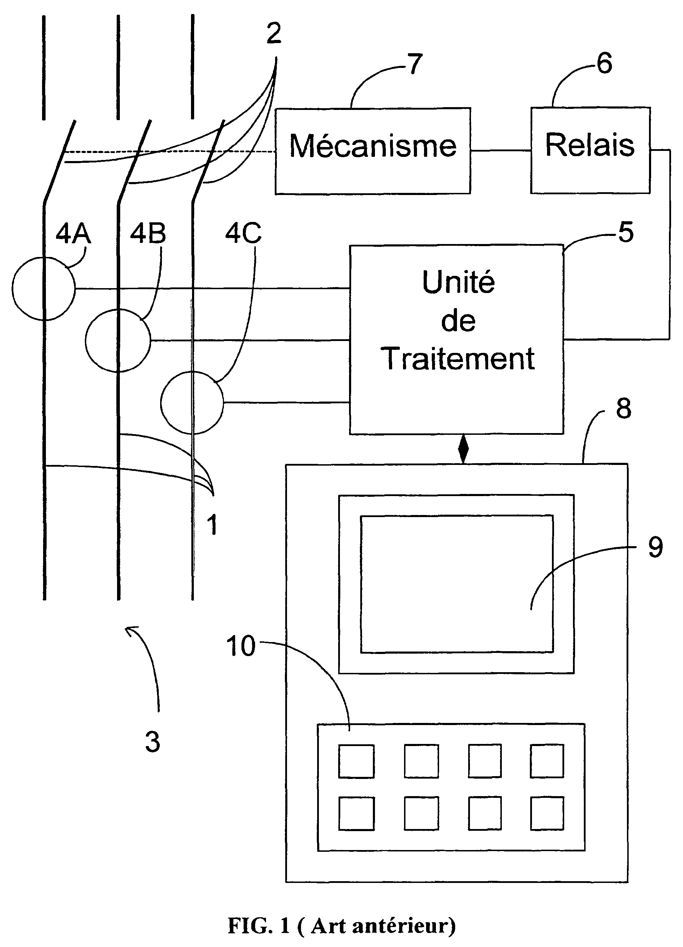

Le schéma de la figure 1 représente un disjoncteur comprenant un déclencheur de l'art antérieur. Dans ce disjoncteur, des conducteurs principaux 1 sont connectés en série avec des contacts 2 destinés à interrompre un courant électrique dans un réseau 3 de distribution.

Des capteurs de courant 4A, 4B, 4C fournissent à une unité de traitement 5 des signaux représentatifs de courant circulant dans les conducteurs principaux. L'unité de traitement 5 effectue notamment les fonctions de protection et fournit un signal de déclenchement à un relais 6 si des signaux de courants dépassent des courbes de protections prédéterminées. Par exemple, les courbes de déclenchement sont représentatives de fonctions de protection long-retard, court-retard, instantanée et/ou homopolaire. Le relais de déclenchement 6 commande un mécanisme 7 d'ouverture de contacts lorsqu'il est commandé par l'unité de traitement.

Les réglages des courbes de déclenchement sont de préférence réalisés au moyen d'une interface homme-machine 8 connectée à l'unité de traitement. Généralement, l'interface 8 comporte un écran 9 et un clavier ou des touches 10. Ainsi, l'interface homme-machine permet de fournir des paramètres de réglage et d'afficher sur l'écran des informations et des courbes de déclenchement.

Le réglage d'un déclencheur est une opération qui nécessite un grand soin puisqu'elle contribue à la sécurité d'une installation électrique. Une interface homme-machine d'un déclencheur selon l'invention participe à la sécurité d'une installation en évitant les risques d'erreurs et en rendant les réglages plus faciles.

Dans un mode de réalisation de l'invention, l'interface homme-machine comporte des moyens d'affichage de réglage qui modifient l'impact visuel d'au moins une portion de courbe représentative d'un paramètre en cours de réglage.

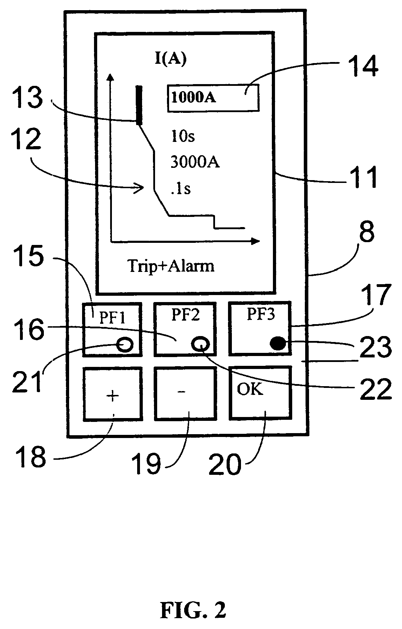

Dans l'interface homme-machine représentée sur la figure 2, un écran d'affichage 11 graphique ou semi-graphique affiche d'une courbe de déclenchement 12. Sur cette figure, une portion de courbe 13 représentative d'un seuil de courant long-retard ou protection thermique a un aspect visuel différent. Dans ce cas, cette portion de courbe est plus épaisse que le reste de la courbe, pendant que la portion de la courbe est élargie, un paramètre 14 correspondant à cette portion de courbe est encadré. Dans le cas de la figure 2, le seuil de déclenchement long-retard est de 1000A. Le paramètre encadré peut aussi passer en caractère gras pour renforcer la visualisation de la sélection.

L'interface homme-machine comporte des touches de sélection de fonction et des touches de déplacement et de visualisation. Les touches de sélection de fonction comprennent une première touche 15 pour sélectionner une fonction de mesure, une seconde touche 16 de sélection de maintenance, et une troisième touche 17 de sélection de fonction de réglage. Les touches de déplacement et de validation comprennent une touche 18 d'incrémentation de valeur ou de déplacement d'un menu déroulant dans un premier sens, une touche 19 de décrémentation de valeur ou de déplacement de menu dans un second sens, et une touche 20 de validation.

Pour visualiser la touche de sélection de fonction qui est actionnée, chaque touche de fonction 15, 16, 17 est associée à un voyant respectivement 21, 22, 23. Par exemple, sur la figure 2, la touche 17 est sélectionnée et le voyant 23 associé est allumé pour visualiser que la fonction de réglage de paramètres est sélectionnée.

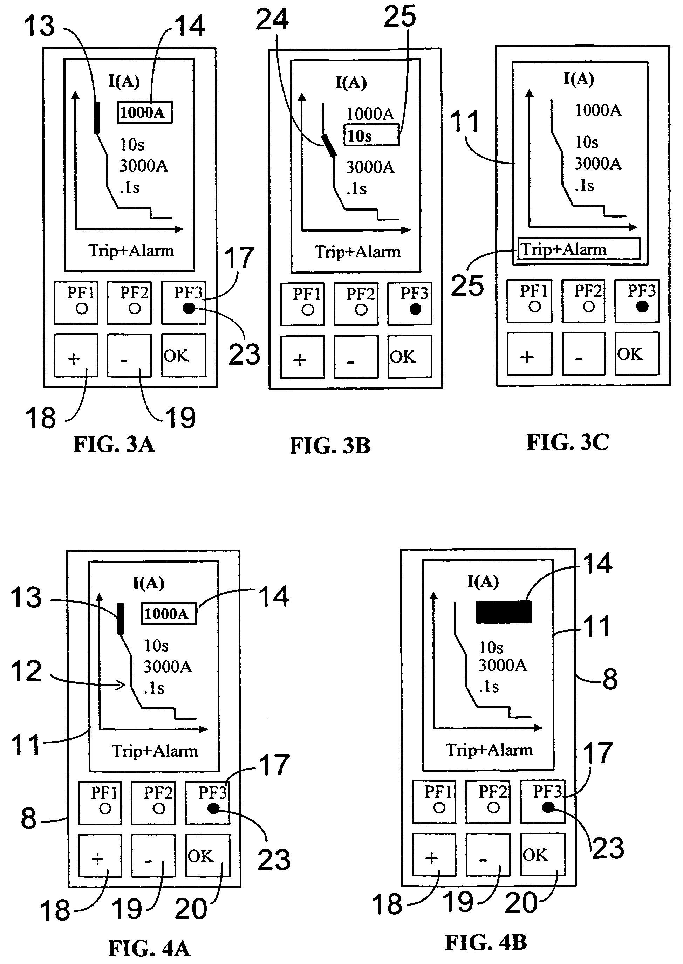

Les figures 3A à 3C montrent un cycle de sélection de paramètres. Sur la figure 3A, la touche 17 est sélectionnée et le voyant 23 est éclairé. La touche 17 sélectionne la fonction réglage. La portion 13 de la courbe est plus épaisse et le paramètre 14 correspondant est encadré. Ensuite, une action sur la touche 18 ou 19 change le paramètre à sélectionner. Par exemple, il peut sélectionner une portion 24 de la courbe et un paramètre correspondant 25 comme dans la représentation de la figure 3B. Dans ce cas, le paramètre sélectionné est la valeur de la temporisation de la fonction long-retard. D'autres actions sur les touches 18 et 19 peuvent faire circuler la sélection sur d'autres fonctions concernant la courbe. Par exemple, sur la figure 3C, la sélection est portée sur un paramètre d'action 26 concernant le dépassement de la courbe. Le paramètre peut concerner le déclenchement seul, ou éventuellement un déclenchement avec un signal d'alarme ou la commande d'un relais de sortie.

Les figures 4A et 4B montrent une phase de réglage. Lorsque un paramètre est sélectionné au moyen de la touche 17 et éventuellement avec les touches 18 et 19, une action sur la touche de validation 20 fait passer le paramètre en mode de réglage ou modification. Le paramètre sélectionné et encadré passe alors en mode d'affichage différent, de préférence en vidéo inverse comme sur la représentation de la figure 4B. Ainsi, la figure 4A montre l'interface avant une action sur la touche de validation 20 et la figure 4B montre l'interface après l'action sur ladite touche 20. Le mode d'affichage différent peut être aussi un changement de couleur du texte et/ou du fond.

Ensuite, lorsque l'interface se trouve dans l'état de modification possible tel que celui représenté sur la figure 4B, une action sur les touches 18 ou 19 permet de modifier les valeurs du paramètre sélectionné. Dans ce cas, un changement de la valeur du seuil de protection long-retard est possible. A la fin de l'opération de modification de réglage, une nouvelle action sur la touche de validation 20 permet de repasser en mode sélection et de choisir d'autres paramètres ou de sortir de la fonction de réglage.

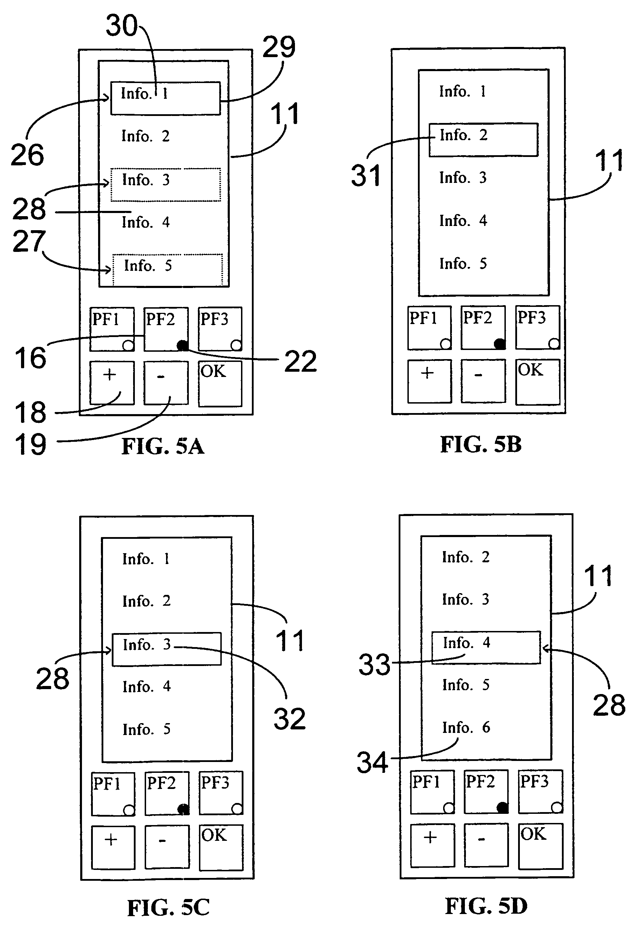

Les figures 5A à 5D représentent le déroulement d'un menu lors d'une phase de sélection d'informations. La sélection d'informations peut être réalisée quelle que soit la fonction souhaitée. Par exemple, dans les figures 5A à 5D, la sélection d'informations est réalisée avec la seconde touche 16 de fonction de maintenance sélectionnée. Le voyant 22 est alors actif.

Les touches 18 et 19 permettent dans ce cas d'encadrer une information à sélectionner. La sélection se fait donc en déplaçant un cadre 29 pour sélectionner une information ou en déplaçant le menu de l'information en fonction de la position dudit cadre.

Le cadre peut se trouver dans une position en butée haute 26 dans une position en butée basse 27 ou dans des positions intermédiaires. Une position intermédiaire 28 entre la butée haute et la butée basse est déterminée pour faire circuler le menu des informations si le nombre d'informations est supérieur au nombre de lignes de l'écran destinées à l'affichage desdites informations. Dans le cas des figures 5A à 5D, le nombre de positions est de cinq, la butée haute 26 est sur la première ligne, la butée basse 27 est sur la cinquième ligne, et la butée intermédiaire 28 est sur la troisième ligne.

Dans un déroulement descendant le cadre 29 se déplace de la première information 30 vers la seconde information 31 puis vers la troisième information 32. Si le cadre se trouve dans une position intermédiaire 28, se sont alors les informations qui déroulent vers le haut. Ainsi, une information 33 remonte dans le cadre en position intermédiaire 28, une information 34 en sixième rang apparaît à l'écran et la première information 31 disparaît. Lorsque la dernière information apparaît, le cadre peut alors se déplacer jusqu'à la position en butée basse.

Dans un déroulement ascendant le déplacement du cadre se fait de la même manière. Le cadre reste dans la position intermédiaire tant que des informations ne sont pas dans l'écran et remonte en butée haute dès que la première information 31 est dans la position haute 26.

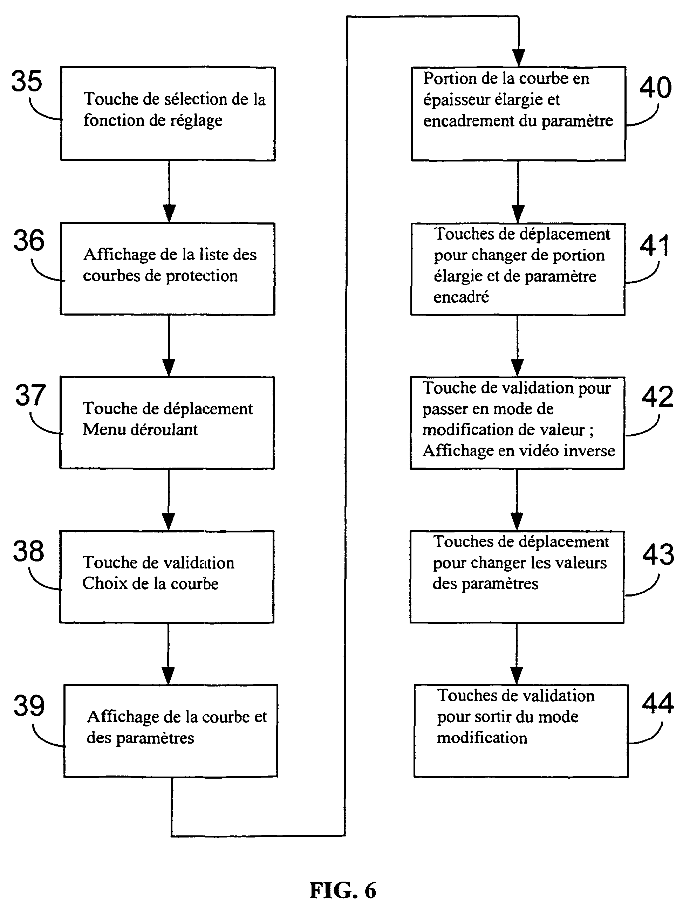

La figure 6 représente un organigramme qui montre le passage d'un menu déroulant à une phase de réglage et de modification de paramètres.

Dans cet organigramme, la touche de sélection 17 est actionnée à une étape 35. Puis à une étape 36, une liste de fonctions à paramètres est affichée sur l'écran 11. Cette liste comporte notamment les courbes de protection, par exemple les protections long-retard, court-retard ou protection-terre. Pour choisir la fonction, à une étape 37, un menu déroulant est actionné à l'aide des touches 18 et 19 comme par exemple, sur les figures 5A à 5D. Lorsque la fonction est encadrée, à une étape 38, la touche de validation 20 est actionnée pour afficher, à une étape 39, la courbe ou la fonction choisie et les paramètres correspondants.

A une étape 40 une portion de courbe est affichée en épaisseur élargie et le paramètre correspondant est encadré. Les touches de déplacement 18 et 19 permettent alors de changer de portion de courbe et de paramètre encadré à une étape 41. Puis, lorsque la sélection est effectuée, une action sur la touche de validation à une étape 42 fait passer l'interface en mode de modification de valeur. L'affichage du paramètre est alors en vidéo inverse. Puis. à une étape 43, les touches de déplacement 18 et 19 permettent de changer les valeurs de paramètres, par exemple, en faisant défiler des valeurs prédéterminées du paramètre sélectionné en cours de réglage. Enfin, à une étape 44, une action sur la touche de validation 20 permet d'enregistrer la nouvelle valeur du paramètre et de sortir du mode de modification de valeurs.

L'interface homme-machine peut avantageusement être associé à des moyens de réglage manuels ou à des moyens de réglage distants reliés par des moyens de communication. Lorsque des moyens de réglage manuels sont activés l'interface passe automatiquement en mode de réglage de paramètres et la valeur déterminée par les moyens de réglage manuels est affichée. Les moyens de réglage manuels peuvent être avantageusement des commutateurs ou des roues codeuses qui ne nécessitent pas obligatoirement la présence d'une afficheur ou d'une interface homme-machine.

Lorsque l'interface homme-machine est associé au moyen de réglage manuel, les valeurs des paramètres qui peuvent être changés par l'interface sont limitées aux valeurs maximales desdits paramètres déterminés par les moyens de réglage manuels. Par exemple, si les moyens de réglage manuels attribuent un seuil de protection long-retard et une temporisation de protection long-retard, l'interface permettra un réglage des paramètres concernés entre des valeurs minimales et les valeurs de seuils et des temporisations long-retard déterminés par les moyens de réglage manuels.

De préférence, les moyens de réglage manuels peuvent être verrouillés, par exemple, par un capot qui empêche des manoeuvres après un réglage par des personnes habilitées et l'interface homme-machine peut être laissée accessible à d'autres personnels.

Les fonctions de mesure accessibles par la touche 15 peuvent être par exemple :
- des mesures de courant de phase et de neutre,
- des mesures de courant homopolaire ou de terre,
- des mesures de tension entre phase et neutre ou entre deux phases,
- des mesures de puissance apparente, active, ou réactive,
- des mesures d'énergie,
- des mesures de fréquence, et/ou
- des mesures de facteur de puissance ou de facteur de crête.

Lors d'un déclenchement, le courant coupé peut ainsi être affiché.

Des moyennes de grandeurs électriques décrites ci-dessus peuvent aussi être affichées, ces moyennes étant calculées sur des durées paramétrables.

Les fonctions de maintenance accessibles par la touche 16 peuvent être par exemple :
- des historiques de déclenchement en indiquant le type de défaut, la date et l'heure, et les valeurs mesurées à l'instant du défaut, par exemple le courant coupé,
- des historiques d'alarmes en indiquant par exemple le type d'alarme, la date, l'heure et les valeurs mesurées à l'activation de l'alarme,
- l'affichage d'informations représentatives de l'usure de contacts, d'un compteur de manoeuvres ou de température,
- des fonctions de commande de relais,
- des fonctions de configuration de paramètres de communication sur un réseau, et/ou
- des fonctions de configuration de paramètres de test.

Les fonctions de configuration de paramètres de relais permettent de sélectionner une grandeur d'entrée, un seuil, un sens de dépassement du seuil croissant ou décroissant et la présence ou non d'un cycle d'hystérésis. La grandeur d'entrée peut être par exemple un courant, une tension, une puissance, une valeur de température, ou une fréquence.

Les fonctions de protection accessibles par la touche 17 peuvent être par exemple :
- des courbes de protection long-retard, court-retard, et instantanée,
- des courbes de protection terre,
- des courbes de protection différentielle,
- des alarmes en déséquilibre de tension, en maximum de tension, ou en minimum de tension,
- des alarmes en maximum de puissance ou en retour de puissance,
- des alarmes en minimum ou en maximum de fréquence,
- des indications sur le sens de rotation des phases, et/ou
- des fonctions de délestage, re lestage en fonction des valeurs de courant ou de puissance.

Lorsque l'interface homme-machine est associée à des moyens de réglage distants reliés par des moyens de communication, le protocole de communication peut-être avantageusement de type Internet, notamment au format dit "TCP/IP" ou au format hypertexte dit "HTTP".

L'interface homme-machine peut-être, par exemple, représentée sur un écran d'ordinateur pour afficher des informations et des courbes de déclenchement et pour déterminer des paramètres de réglage. Avantageusement, des paramètres de réglage sont déterminés par des touches représentées sur l'écran de l'interface homme-machine.

Le mouvement d'un curseur sur une touche peut permettre notamment de sélectionner puis d'actionner ladite touche matérialisée par une image sur l'écran.

## Revendications

1. Déclencheur électronique comportant :
- une unité de traitement (5) ayant des entrées pour recevoir des signaux électriques représentatifs de grandeurs électriques et une sortie pour fournir un signal de déclenchement à un relais (6) de déclenchement, et
- une interface homme-machine (8) connectée à l'unité de traitement pour fournir des paramètres de réglages et afficher sur un écran (9) des informations et des courbes de déclenchement,
déclencheur **caractérisé en ce que** l'interface homme-machine comporte des moyens d'affichage (11) de paramètres de réglage qui modifient l'aspect visuel d'au moins une portion (13, 24) de courbe (12) représentative d'un paramètre (14, 25) en cours de réglage,
lesdits moyens d'affichage (11) de paramètres de réglage encadrent au moins une information (14, 25) affichée sur l'écran représentative d'un paramètre en cours de réglage,
l'interface homme-machine comportant des moyens de sélection comportant des touches de fonctions (15, 16, 17) associées à des voyants (21, 22, 23) pour visualiser une fonction sélectionnée par une touche, lesdites touches de fonction (15, 16, 17) comportent au moins une première touche (15) pour sélectionner une fonction de mesure, au moins une seconde touche (16) pour sélectionner une fonction de maintenance, et une troisième touche (17) pour sélectionner une fonction de réglage.

2. Déclencheur selon la revendication 1, **caractérisé en ce que** les moyens d'affichage (11) de paramètres de réglage modifient l'aspect visuel d'au moins une portion (13, 24) de courbe (12) en augmentant l'épaisseur de ladite au moins une portion de courbe représentative d'un paramètre en cours de réglage.

3. Déclencheur selon l'une quelconque des revendications 1 ou 2, **caractérisé en ce que** les moyens d'affichage (11) de paramètres de réglage changent au moins une couleur de texte ou de fond d'au moins une information (14, 25) affichée sur l'écran représentative d'un paramètre en cours de modification de valeur.

4. Déclencheur selon l'une quelconque des revendications 1 à 3, **caractérisé en ce que** l'interface homme-machine comporte des moyens d'affichage (11) d'un menu déroulant pour encadrer (29) lors d'une phase de sélection au moins une information (31-34) à sélectionner.

5. Déclencheur selon la revendication 4, **caractérisé en ce que** les moyens d'affichage encadrent dans un menu déroulant une information en butée haute (26), une information en butée basse (27), et des informations déroulant dans un cadre en position fixe (28) intermédiaire entre une position haute (26) et une position basse (27).

6. Déclencheur selon l'une quelconque des revendications 1 à 5 **caractérisé en ce que** l'interface homme-machine est connectée par des moyens de communication à l'unité de traitement.

7. Déclencheur selon la revendication 6 **caractérisé en ce que** les moyens de communication communiquent selon un protocole de type Internet.

8. Déclencheur selon l'une quelconque des revendications 1 à 7 **caractérisé en ce que** l'interface homme-machine est représentée sur un écran pour afficher des informations et des courbes de déclenchement et pour déterminer des paramètres de réglage.

9. Déclencheur selon la revendication 8 **caractérisé en ce que** des paramètres de réglage sont déterminés par des touches représentées sur un écran de l'interface homme-machine.

10. Disjoncteur comportant des contacts principaux (2) connectés en série avec des conducteurs (1) de puissance, des capteurs (4A, 4B, 4C) de courant disposés sur lesdits conducteurs, et un relais (6) de déclenchement recevant un signal de déclenchement pour provoquer l'ouverture desdits contacts, **caractérisé en ce qu'**il comporte un déclencheur selon l'une quelconque des revendications 1 à 9, connecté audits capteurs de courant et audit relais de déclenchement.

11. Procédé de paramétrage d'un déclencheur selon les revendications 1 à 9 **caractérisé en ce qu'**il comporte :
- une étape (35) d'action sur une touche (17) de sélection de fonction de réglage,
- une étape (36) d'affichage d'une liste de courbes de protection,
- une étape (37) d'action sur au moins une touche (18, 19) de déplacement dans un menu déroulant,
- une étape (38) d'action sur une touche de validation (20) pour sélectionner une courbe à paramétrer,
- une étape (39) d'affichage d'une courbe sélectionnée et de paramètres de réglages correspondants,
- une étape (40) d'affichage d'une portion de courbe sélectionnée en épaisseur élargie et d'un paramètre correspondant avec un cadre,
- une étape (41) d'action sur au moins une touche (18, 19) de déplacement pour changer de portion de courbe et de paramètre correspondant,
- une étape (42) d'action sur une touche (20) de validation pour passer en mode de modification de valeur de paramètre,
- une étape (43) d'action sur une touche de déplacement (18, 19) pour changer des valeurs de paramètres (14, 25), et
- une étape (44) d'action sur au moins une touche (20) de validation pour sortir du mode de modification.

## Patentansprüche

1. Elektronischer Auslöser, der Folgendes umfasst:
- eine Verarbeitungseinheit (5), die Eingänge zum Empfangen elektrischer Signale, die elektrische Größen repräsentieren, und einen Ausgang, um ein Auslösesignal an ein Auslöserelais (6) zu liefern, besitzt, und
- eine Mensch/Maschinen-Schnittstelle (8), die mit der Verarbeitungseinheit verbunden ist, um Regulierungsparameter zu liefern und um auf einem Bildschirm (9) Auslöseinformationen und -kurven anzuzeigen,
wobei der Auslöser **dadurch gekennzeichnet ist, dass** die Mensch/Maschine-Schnittstelle Mittel (11) zum Anzeigen von Regulierungsparametern umfasst, die den visuellen Aspekt wenigstens eines Abschnitts (13, 24) der Kurve (12), der einen Parameter (14, 25) im Verlauf der Regulierung repräsentiert, modifizieren,
die Mittel (11) zum Anzeigen von Regulierungsparametern wenigstens Informationen (14, 25) angeben, die auf dem Bildschirm angezeigt werden und einen Parameter im Verlauf der Regulierung repräsentieren,
wobei die Mensch/Maschinen-Schnittstelle Auswahlmittel umfasst, die Funktionstaster (15, 16, 17) enthalten, die Anzeigeleuchten (21, 22, 23) zum Sichtbarmachen einer durch eine Taste ausgewählten Funktion zugeordnet sind, wobei die Funktionstasten (15, 16, 17) wenigstens eine erste Taste (15) zum Auswählen einer Messfunktion, wenigstens eine zweite Taste (16) zum Auswählen einer Wartungsfunktion und eine dritte Taste (17) zum Auswählen einer Regulierungsfunktion umfassen.

2. Auslöser nach Anspruch 1, **dadurch gekennzeichnet, dass** die Mittel (11) zum Anzeigen von Regulierungsparametern den visuellen Aspekt wenigstens eines Abschnitts (13, 24) einer Kurve (12) modifizieren, indem sie die Dicke des wenigstens einen Kurvenabschnitts, der einen Parameter im Verlauf der Regulierung repräsentiert, erhöhen.

3. Auslöser nach einem der Ansprüche 1 oder 2, **dadurch gekennzeichnet, dass** die Mittel (11) zum Anzeigen von Regulierungsparametern wenigstens eine Textfarbe oder eine Hintergrundfarbe wenigstens von Informationen (14, 25), die auf dem Bildschirm angezeigt werden und einen Parameter im Verlauf der Modifikation des Wertes repräsentieren, ändern.

4. Auslöser nach einem der Ansprüche 1 bis 3, **dadurch gekennzeichnet, dass** die Mensch/Maschinen-Schnittstelle Mittel (11) zum Anzeigen eines Ausklappmenüs umfasst, um in einer Auswahlphase wenigstens Informationen (31-34), die auszuwählen sind, anzugeben (29).

5. Auslöser nach Anspruch 4, **dadurch gekennzeichnet, dass** die Anzeigemittel in einem Ausklappmenü Informationen am oberen Rand, Informationen am unteren Rand (27) und Informationen in einem Rahmen an einer festen Zwischenposition (28) zwischen einer oberen Position (26) und einer unteren Position (27) angibt.

6. Auslöser nach einem der Ansprüche 1 bis 5, **dadurch gekennzeichnet, dass** die Mensch/Maschinen-Schnittstelle über Kommunikationsmittel mit der Verarbeitungseinheit verbunden ist.

7. Auslöser nach Anspruch 6, **dadurch gekennzeichnet, dass** die Kommunikationsmittel gemäß einem Internetprotokoll kommunizieren.

8. Auslöser nach einem der Ansprüche 1 bis 7, **dadurch gekennzeichnet, dass** die Mensch/Maschinen-Schnittstelle auf einem Bildschirm dargestellt wird, um Auslöseinformationen und -kurven anzuzeigen und um Regulierungsparameter zu bestimmen.

9. Auslöser nach Anspruch 8, **dadurch gekennzeichnet, dass** Regulierungsparameter durch Tasten bestimmt werden, die auf einem Bildschirm der Mensch/Maschinen-Schnittstelle dargestellt werden.

10. Auslöser, der Hauptkontakte (2), die mit Stromleitern (1) in Reihe geschaltet sind, Stromsensoren (4A, 4B, 4C), die an den Leitern angeordnet sind, und ein Auslöserelais (6), das ein Auslösesignal empfängt, um das Öffnen der Kontakte hervorzurufen, umfasst, **dadurch gekennzeichnet, dass** er einen Auslöser nach einem der Ansprüche 1 bis 9 umfasst, der mit den Stromsensoren und mit dem Auslöserelais verbunden ist.

11. Verfahren zum Parametrisieren eines Auslösers nach einem der Ansprüche 1 bis 9, **dadurch gekennzeichnet, dass** es Folgendes umfasst:
- einen Schritt (35) des Betätigens einer Taste (17) zum Auswählen einer Regulierungsfunktion,
- einen Schritt (36) des Anzeigens einer Liste von Schutzkurven,
- einen Schritt (37) des Betätigens wenigstens einer Schiebetaste (18, 19) in einem Ausklappmenü,
- einen Schritt (38) des Betätigens einer Validierungstaste (20), um eine zu parametrisierende Kurve auszuwählen,
- einen Schritt (39) des Anzeigens einer ausgewählten Kurve und von entsprechenden Regulierungsparametern,
- einen Schritt (40) des Anzeigens eines ausgewählten Kurvenabschnitts mit erhöhter Dicke und eines entsprechenden Parameters mit einem Rahmen,
- einen Schritt (41) des Betätigens wenigstens einer Schiebetaste (18, 19), um einen Kurvenabschnitt und einen entsprechenden Parameter zu ändern,
- einen Schritt (42) des Betätigens einer Validierungstaste (20), um in die Betriebsart des Modifizierens eines Parameterwertes überzugehen,
- einen Schritt (43) des Betätigens einer Schiebetaste (18, 19), um Parameterwerte (14, 25) zu ändern, und
- einen Schritt (44) des Betätigens wenigstens einer Validierungstaste (20), um die Modifikationsbetriebsart zu verlassen.

## Claims

1. Electronic trip device comprising:
- a processing unit (5) having inputs for receiving electrical signals representative of electrical quantities and an output for supplying a trip signal to a trip relay (6), and
- a human-machine interface (8) connected to the processing unit to supply setting parameters and display trip information and curves on a screen (9),
the trip device being **characterized in that** the human-machine interface comprises setting parameter display means (11) which modify the visual appearance of at least one portion (13, 24) of a curve (12) representative of a parameter (14, 25) being set,
said setting parameter display means (11) frame at least one information item (14, 25) displayed on the screen representative of a parameter being set,
the human-machine interface comprising selection means comprising function keys (15, 16, 17) associated with indicator lamps (21, 22, 23) for displaying a function selected by a key, said function keys (15, 16, 17) comprise at least one first key (15) for selecting a measurement function, at least one second key (16) for selecting a maintenance function, and a third key (17) for selecting a setting function.

2. Trip device according to Claim 1, **characterized in that** the setting parameter display means (11) modify the visual appearance of at least one portion (13, 24) of a curve (12) by increasing the thickness of said at least one portion of a curve representative of a parameter being set.

3. Trip device according to either one of Claims 1 and 2, **characterized in that** the setting parameter display means (11) change at least one text or background colour of at least one information item (14, 25) displayed on the screen representative of a parameter whose value is being modified.

4. Trip device according to any one of Claims 1 to 3, **characterized in that** the human-machine interface comprises display means (11) for a scrolling menu for framing (29), in a selection phase, at least one information item (31-34) to be selected.

5. Trip device according to Claim 4, **characterized in that** the display means frame, in a scrolling menu, an information item in a high end stop position (26), an information item in a low end stop position (27), and information scrolling in a frame in a fixed intermediate position (28) between a high position (26) and a low position (27).

6. Trip device according to any one of Claims 1 to 5, **characterized in that** the human-machine interface is connected by communication means to the processing unit.

7. Trip device according to Claim 6, **characterized in that** the communication means communicate according to an Internet-type protocol.

8. Trip device according to any one of Claims 1 to 7, **characterized in that** the human-machine interface is represented on a screen for displaying trip information and curves and for determining setting parameters.

9. Trip device according to Claim 8, **characterized in that** setting parameters are determined by keys represented on a screen of the human-machine interface.

10. Circuit breaker comprising main contacts (2) connected in series with power conductors (1), current sensors (4A, 4B, 4C) arranged on said conductors, and a trip relay (6) receiving a trip signal to provoke the opening of said contacts, **characterized in that** it comprises a trip device according to any one of Claims 1 to 9, connected to said current sensors and to said trip relay.

11. Method for parameterizing a trip device according to Claims 1 to 9, **characterized in that** it comprises:
- a step (35) of action on a setting function selection key (17),
- a step (36) of display of a list of protection curves,
- a step (37) of action on at least one key (18, 19) for movement in a scrolling menu,
- a step (38) of action on a validation key (20) to select a curve to be parameterized,
- a step (39) of display of a selected curve and of corresponding setting parameters,
- a step (40) of display of a selected portion of a curve in wider thickness and of a corresponding parameter with a frame,
- a step (41) of action on at least one movement key (18, 19) to change curve portion and corresponding parameter,
- a step (42) of action on a validation key (20) to switch to parameter value modification mode,
- a step (43) of action on a movement key (18, 19) to change parameter values (14, 25), and
- a step (44) of action on at least one validation key (20) to exit from the modification mode.
